# EUROPEAN PATENT APPLICATION

(11) **EP 4 837 676 A1**
(43) Date of publication of application: **11.11.2026**
(21) Application number: 25869592.3
(22) Date of filing: 07.11.2025
(51) Int. Cl.: B22F 1/12, H01M 10/54, C22B 23/00, C22B 26/12, C22B 47/00, C22B 7/00

(54) **RECYCLED LITHIUM-ION BATTERY MATERIAL POWDER, PREPARATION METHOD THEREFOR, AND APPLICATION THEREOF**

(30) Priority: 19.03.2025 CN 202510324106
(71) Applicant: Guangdong Brunp Recycling Technology Co., Ltd., Foshan, Guangdong 528137 (CN)
(72) Inventor: YU, Haijun, Guangdong 528137 (CN); HUANG, Weiyan, Guangdong 528137 (CN); WANG, Tao, Guangdong 528137 (CN); XIE, Yinghao, Guangdong 528137 (CN); LI, Changdong, Guangdong 528137 (CN)
(74) Representative: Hafner & Kohl PartmbB
(86) International application number: PCT/CN2025/133390
(87) International publication number: WO 2026/194240

(57) **Abstract**

A recycled material powder from lithium-ion batteries, a preparation method therefor, and use thereof are disclosed, which is related to the technical field of battery recycling. The recycled material powder from lithium-ion batteries comprises a metal compound powder and an elemental carbon material, and the metal compound powder includes at least one element selected form the group consisting of lithium, nickel, cobalt, manganese and iron; the recycled material powder from lithium-ion batteries has a separation index S satisfying 0.15 m²/kg≤S≤43 m²/kg, where S=W_{DOC}×BET, W_{DOC} refers to a mass percentage of a dissolved organic carbon in the recycled material powder from lithium-ion batteries, and the dissolved organic carbon refers to an organic carbon which is capable of dissolving or dispersing in an aqueous solution with a pH value of 1-14; and BET refers to a specific surface area of the recycled material powder from lithium-ion batteries. The separation efficiency is high when the cathode material and the anode material in the recycled material powder from lithium-ion batteries are separated, and when the recycled material powder from lithium-ion batteries is subjected to hydrometallurgy to extract valuable metals, a good metal leaching rate is achieved in the acid leaching stage.

## Description

### TECHNICAL FIELD

The present disclosure relates to the technical field of battery recycling, and in particular to a recycled material powder from lithium-ion batteries, a preparation method therefor, and use thereof.

### BACKGROUND

With the rapid development of technology, market demand in the new energy sector, particularly for new energy vehicles, has been continuously expanding. Lithium-ion batteries, as a core component, have been widely used. However, the resulting issue of waste battery disposal has become a bottleneck hindering industry development. Recycling technologies for lithium-ion battery material powder (black mass) has emerged as a solution. These technologies recover valuable metals and other materials from waste batteries for reuse, achieving a green transformation from waste to treasure. The recycled material powder from lithium-ion batteries primarily originates from the disassembling, shredding, and sieving processes of waste lithium-ion batteries. The main components of the recycled material powder include valuable metals such as lithium, cobalt, nickel, and manganese, as well as non-metallic materials like carbon powder and plastics.

Currently, mainstream methods or research directions for black mass recycling and reuse include pyrometallurgy, hydrometallurgy, and direct regeneration. Pyrometallurgy refers to a metallurgical method that uses high-temperature smelting and reduction reactions to separate metals from other impurities to obtain elemental metals. This method has low waste utilization efficiency, high energy consumption, and significant pollution, and can only produce metal alloys. As a result, it is gradually being phased out. Hydrometallurgy involves ionizing metal elements and then separating and enriching the metal elements through techniques such as precipitation, electrowinning, extraction, and ion exchange, finally recovering the target metals as specific compounds in a certain chemical state. This method can obtain relatively pure metal compounds that can be directly used for preparing electrode materials, making it currently the dominant recycling method. Direct regeneration refers to addressing material failure issues without destroying the inherent structure of the materials, achieving structural regeneration to restore the electrochemical activity of the materials. This method has the lowest recycling cost and the least pollution during the recycling process, but the regeneration cost is high, and the performance of regenerated materials still fails to meet application requirements.

In the hydrometallurgical process, metal elements are typically ionized with acid leaching. The acid leaching process requires the addition of hydrogen peroxide to promote the dissolution of metal ions, which generates a large number of bubbles. On one hand, when the acid leaching solution contains dissolved organic carbon (DOC), the DOC acts as a surfactant, making it difficult to eliminate bubbles and potentially causing foam overflow, thereby significantly reducing leaching efficiency. On the other hand, when bubbles rise to the liquid surface, they will carry away black mass particles from the bottom of the reactor. When the porosity of the black mass particles is high (i.e., low density), the black mass tends to float on the liquid surface, further reducing leaching efficiency.

Direct regeneration requires separate regeneration and utilization of cathode and anode materials from the black mass. This necessitates the effective separation of cathode and anode materials from the black mass without damaging their inherent structures. The separation relies on the difference in wettability and density between the two materials. Residual organic substances coating the surfaces of cathode and anode material particles in the black mass reduces the wettability difference between the two. If the porosity of black mass particles is too high, the higher the deviation of cathode material and/or anode material from their true densities, the more difficult the separation based on density difference becomes, thus reducing separation efficiency.

In the process of obtaining black mass from batteries or electrode sheet waste through physical and/or chemical treatment, regulating the physicochemical properties of the black mass (such as organic content, specific surface area, particle size, etc.) to achieve effective separation of cathode/anode materials and high leaching efficiency in hydrometallurgical processes is of great significance for achieving black mass recycling and reuse.

In view of the above, this disclosure is hereby proposed.

### SUMMARY

The objective of the present disclosure is to provide a recycled material powder from lithium-ion batteries, aiming to improve the metal leaching rate during the hydrometallurgy process and the separation efficiency of the cathode and anode materials during the regeneration process.

The present disclosure is achieved as follows:
In a first aspect, the present disclosure provides a recycled material powder from lithium-ion batteries including a metal compound powder and an elemental carbon material, wherein the metal compound powder includes at least one element selected form the group consisting of lithium, nickel, cobalt, manganese and iron; the recycled material powder from lithium batteries has a separation index S satisfying 0.15 m²/kg≤S≤43 m²/kg, where S=W_{DOC}×BET, W_{DOC} refers to a mass percentage of a dissolved organic carbon in the recycled material powder from lithium-ion batteries, and the dissolved organic carbon refers to an organic carbon which is capable of dissolving or dispersing in an aqueous solution with a pH value of 1-14; and BET refers to a specific surface area of the recycled material powder from lithium-ion batteries, expressed in m²/g.

In some embodiments, the recycled material powder from lithium-ion batteries satisfies at least one of the following features 1 to 4:
feature 1: when the pH value of the aqueous solution is less than or equal to 3, the separation index S of the recycled material powder from lithium-ion batteries satisfies 2 m²/kg≤S≤24 m²/kg;
feature 2: when the pH value of the aqueous solution is greater than or equal to 10, the separation index S of the recycled material powder from lithium-ion batteries satisfies 13 m²/kg≤S≤40 m²/kg;
feature 3: the W_{DOC} of the recycled material powder from lithium-ion batteries satisfies W_{DOC}≤15‰; and
feature 4: the BET of the recycled material powder from lithium-ion batteries satisfies 1 m²/g≤BET≤15 m²/g.

In some embodiments, a mass percentage of an iron element in the recycled material powder from lithium-ion batteries is 10% to 30%, and the BET of the recycled material powder from lithium-ion batteries is 10-15 m²/g.

In some embodiments, a mass percentage of a cobalt element in the recycled material powder from lithium-ion batteries is 1% to 50%, and the BET of the recycled material powder from lithium-ion batteries is 1-3 m²/g.

In some embodiments, the recycled material powder from lithium-ion batteries has a Dv50 of 0.6-16 µm.

In some embodiments, the recycled material powder from lithium-ion batteries has a Dv10 of 0.1-1.5 µm.

In some embodiments, the recycled material powder from lithium-ion batteries has a Dv10 of 0.5-5.2 µm.

In some embodiments, a mass percentage of a lithium element in the recycled material powder from lithium-ion batteries is 0%-10%.

In a second aspect, the present disclosure provides a preparation method for the recycled material powder from lithium-ion batteries in any of the above embodiments, including the following steps:
providing a crude recycled material from lithium-ion batteries including a anode material, a cathode material, and organic matter;
subjecting the crude recycled material from lithium-ion batteries to photocatalytic oxidation treatment to obtain a photocatalytically treated intermediate;
subjecting the photocatalytically treated intermediate to flash drying to obtain a dried intermediate;
subjecting the dried intermediate to heat treatment to obtain a heat-treated intermediate; and
cooling the heat-treated intermediate to 20°C or less under an inert atmosphere to obtain a cooled intermediate, and then shredding and sieving the cooled intermediate successively to obtain the recycled material powder from lithium-ion batteries.

In some embodiments, the cathode material includes at least one selected form the group consisting of lithium cobalt oxide, lithium manganese oxide, lithium nickel oxide, lithium nickel cobalt manganese oxide, lithium nickel cobalt aluminum oxide, and lithium iron phosphate.

In some embodiments, the anode material includes graphite.

In some embodiments, the organic matter includes a polymeric compound obtained through addition reactions of carbon-carbon unsaturated bonds and an organic solvent, wherein the polymeric compound includes, but is not limited to, at least one selected form the group consisting of polyvinylidene fluoride (PVDF), polyacrylonitrile (PAN), polyacrylic acid (PAA), polyethylene (PE), and polypropylene (PP), and the organic solvent includes but is not limited to at least one selected form the group consisting of ethylene carbonate, propylene carbonate, butylene carbonate, pentylene carbonate, dimethyl carbonate, diethyl carbonate, dipropyl carbonate, and ethyl methyl carbonate.

The photocatalytic oxidation treatment refers to ultraviolet irradiation of the crude recycled material from lithium-ion batteries in an oxygen-containing and/or aqueous environment in the presence of a photocatalyst.

In some embodiments, the photocatalyst includes at least one of titanium dioxide or zinc oxide. In some specific embodiments, the photocatalyst is anatase titanium dioxide. In some embodiments, the photocatalyst has a particle size of less than 500 nm and is supported on at least one of the following carriers: aluminum foil, ceramic, glass, silica, molecular sieve, and screen mesh, with the aim of facilitating the separation of the photocatalytically treated intermediate from the photocatalyst.

In some embodiments, conditions of ultraviolet irradiation include a light wavelength of 200-400 nm and an irradiation duration of 5-15 h.

In some embodiments, the photocatalytic oxidation treatment is conducted at an environmental humidity maintained at 60% to 100%, and an environmental oxygen content maintained 30 vt% or more.

In some embodiments, the flash drying is carried out at an inlet air temperature of 200-400 °C, an outlet air temperature of 100-200 °C, a rotation speed of 10-30 Hz, and a feed frequency of 10-30 Hz.

In some embodiments, the heat treatment is carried out under negative pressure at a temperature of 350°C to 500 °C, a pressure of -0.01 to -0.05 MPa, and for a duration of 0.5-1.5 h.

In some embodiments, a cooling rate is 1-6 °C/min.

In some embodiments, the crude recycled material from lithium-ion batteries has a particle size of less than 1 cm.

In some embodiments, the crude recycled material from lithium-ion batteries is obtained by mechanically comminuting the battery waste through disassembly, stamping, grinding, and shearing, etc.

In some implementation plans, the battery waste includes, but is not limited to, spent batteries, spent battery cells, spent battery jelly rolls, electrode sheet wastes, and off-spec batteries on the production lines.

In some embodiments, light fractions of the battery waste such as plastic, aluminum foil, and copper foil are removed through methods such as air classification, sieving, density separation, and optical sorting, etc.

In some embodiments, bulky fractions of the battery waste such as casings, wires, and sealing plates can be separated manually or automatically. For example, the magnetic components can be separated by a magnetic separator, while non-magnetic metals can be separated by an eddy current separator.

In a third aspect, the present disclosure provides use of the recycled material powder from lithium-ion batteries as described in any of the above embodiments.

The recycled material powder from lithium-ion batteries is used in hydrometallurgy, and the hydrometallurgy includes the steps of dispersing the recycled material powder from lithium-ion batteries in an acid solution to obtain an acid-leachate containing metal ions.

In some embodiments, the acid-leachate is subjected to steps including, but not limited to, impurity removal, extraction, precipitation, and drying, etc., to obtain a product enriched in valuable metal elements including at least one selected from the group consisting of nickel, cobalt, manganese, lithium, and iron.

In some embodiments, the acid-leachate is subjected to steps including, but not limited to, impurity removal and extraction, etc., to obtain an aqueous solution enriched in metal salts; and the metal salts include at least one selected from the group consisting of nickel salt, cobalt salt, manganese salt, and lithium salt.

In some embodiments, the acid-leachate is subjected to steps including, but not limited to, impurity removal, precipitation, carbonation, and drying, etc., to obtain lithium carbonate.

The recycled material powder from lithium-ion batteries is used in regeneration of a cathode material, and the regeneration of the cathode material includes the steps of enriching the cathode material in the recycled material powder from lithium-ion batteries by flotation separation, adding a lithium source to the cathode material and calcining a resulting mixture to obtain a regenerated cathode material.

The recycled material powder from lithium-ion batteries is used in recycling of graphite, and the recycling of graphite includes the steps of enriching the graphite in the recycled material powder from lithium-ion batteries by flotation separation so as to recycle the graphite. In some embodiments, the graphite is subjected to heat treatment to obtain a regenerated anode material.

In some embodiments, the graphite is used to prepare graphene.

In a fourth aspect, the present disclosure provides a hydrometallurgy method, including dispersing the recycled material powder from lithium-ion batteries of any of the above embodiments in an acid solution to obtain an acid-leachate containing metal ions.

In some embodiments, the acid-leachate is subjected to steps including, but not limited to, impurity removal, extraction, precipitation, and drying, etc., to obtain a product enriched in valuable metal elements including at least one selected from the group consisting of nickel, cobalt, manganese, lithium, and iron.

In some embodiments, the acid-leachate is subjected to steps including, but not limited to, impurity removal and extraction, etc., to obtain an aqueous solution enriched in metal salts; and the metal salts include at least one selected from the group consisting of nickel salt, cobalt salt, manganese salt, and lithium salt.

In some embodiments, the acid-leachate is subjected to steps including, but not limited to, impurity removal, precipitation, carbonation, and drying, etc., to obtain lithium carbonate.

In a fifth aspect, the present disclosure provides a regeneration method for a cathode material, including enriching thecathode material in the recycled material powder from lithium-ion batteries of any of the above embodiments by flotation separation, adding a lithium source to the cathode material and calcining a resulting mixture to obtain a regenerated cathode material.

In a sixth aspect, the present disclosure provides a recycling method for graphite, including enriching the graphite in the recycled material powder from lithium-ion batteries of any of the above embodiments by flotation separation, so as to recycle the graphite.

The present disclosure has the following beneficial effects.

The present disclosure provides a recycled material powder from lithium-ion batteries, and a product of the dissolved organic carbon content and specific surface area of the recycled material powder from lithium-ion batteries falls within an appropriate range. Within this range, the recycled material powder from lithium-ion batteries has a relatively high separation efficiency during separation of the cathode and anode materials, and demonstrates favorable metal leaching rate during the acid leaching stage when used in hydrometallurgy for extracting valuable metals.

### DETAILED DESCRIPTION

In order to more clearly illustrate the objectives, technical solutions, and advantages of the embodiments of the present disclosure, a clear and complete description of the technical solutions in the embodiments of the present disclosure will be made below. The conventional conditions or conditions recommended by the manufacturers shall be followed unless specific conditions are specified in the embodiments. The reagents or instruments used of which the manufacturers are not indicated, are all commercially available conventional products.

The present disclosure provides a recycled material powder from lithium-ion batteries, including a metal compound powder and an elemental carbon material. The metal compound powder includes at least one element selected form the group consisting of lithium, nickel, cobalt, manganese and iron. The recycled material powder from lithium-ion batteries has a separation index S satisfying 0.15 m²/kg≤S≤43 m²/kg, where S=W_{DOC}×BET, W_{DOC} refers to a mass percentage of a dissolved organic carbon (DOC) in the recycled material powder from lithium-ion batteries, and the dissolved organic carbon refers to an organic carbon which is capable of dissolving or dispersing in an aqueous solution with a pH value of 1-14; and BET refers to a specific surface area of the recycled material powder from lithium-ion batteries, expressed in m²/g.

The metal compound powder includes a cathode material, and the cathode material includes at least one selected form the group consisting of lithium cobalt oxide, lithium manganese oxide, lithium nickel oxide, lithium nickel cobalt manganese oxide, lithium nickel cobalt aluminum oxide, and lithium iron phosphate. The metal compound powder is rich in valuable metals such as lithium, nickel, cobalt, manganese, and iron, and the recycling of which has both economic and environmental significance.

The elemental carbon material includes graphitized carbon, such as graphite, graphene, carbon nanotubes and the like.

In some embodiments, the elemental carbon further includes non-graphitic carbon, i.e., amorphous carbon such as carbon black, hard carbon and the like.

The recycled material powder from lithium-ion batteries is a powder enriched in a cathode material and a anode material (graphite) obtained by subjecting the spent lithium-ion batteries to processes such as disassembling, shredding, and sorting and the recycling methods of which include hydrometallurgy, and direct regeneration, etc. The hydrometallurgy includes dispersing the recycled material powder from lithium-ion batteries in an acid solution for acid leaching to obtain an acid-leachate containing valuable metal ions. Some physical and chemical properties of the recycled material powder from lithium-ion batteries, such as particle size, specific surface area, and component, etc., have a significant impact on the acid leaching process. Direct regeneration requires first separating the metal compound powder from the elemental carbon material in the recycled material powder from lithium-ion batteries, then adding a lithium source to the metal compound powder and calcining a resulting mixture to obtain the regenerated cathode material. The elemental carbon material can be recycled through for example heat treatment, oxidation stripping, and coating, etc. Some physical and chemical properties of the recycled material powder from lithium-ion batteries, such as surface properties, density, and particle size, etc., have a significant impact on the separation efficiency of both.

The present disclosure provides a recycled material powder from lithium-ion batteries, which has a separation index S satisfying 0.15 m²/kg≤S≤43 m²/kg, where S=W_{DOC}×BET. The recycled material powder from lithium-ion batteries with a separation index in this range exhibits a good separation efficiency for cathode and anode materials and a high metal leaching rate.

A lower W_{DOC} indirectly indicates less residual organic carbon in the recycled material powder from lithium-ion batteries. The sources of organic carbon include incompletely removed electrolytic solution, a binder, decomposition products of the electrolytic solution and binder, and extraneous carbon contaminants, etc. The residual amount and type of organic matter are related to the process parameters used to obtain the recycled material powder from lithium-ion batteries, for example, higher calcination temperature and longer calcination time result in lower residual organic carbon. Similarly, adding additives to promote the decomposition and gasification of the organic matter can result in less residual organic carbon, etc.

On the one hand, the recycled material powder from lithium-ion batteries with lower W_{DOC} is less prone to "foam overflow" during the acid leaching process and is beneficial for improving the metal leaching rate. Because the organic matter dissolved during the acid leaching process (i.e., DOC) acts as a surfactant, which makes the bubbles generated during the acid leaching process difficult to dissipate, and the bubbles tend to carry the material powder away from the liquid phase, thereby reducing the metal leaching rate; and too many bubbles can easily lead to "foam overflow", thereby reducing the process controllability. On the other hand, the recycled material powder from lithium-ion batteries with lower W_{DOC} demonstrate higher separation efficiency between cathode and anode materials. Because the separation of cathode and anode materials is usually achieved through the differences in surface wettability, and density, etc., of the powder particles, excessive residual organic matter in the recycled material powder from lithium-ion batteries reduces the differences in surface wettability of the cathode and anode materials, rendering separation difficult. Therefore, a lower W_{DOC} contributes to obtaining the recycled material powder from lithium-ion batteries of better quality.

BET is the specific surface area of the recycled material powder from lithium-ion batteries. Within a certain range, the larger the BET, the higher the metal leaching rate in the hydrometallurgy process. However, if the BET is too large, it is not conducive to improving the metal leaching rate.

Specifically, on the one hand, an excessively high BET indicates excessively small particle size or a highly porous structure. Excessively small particle size causes the powder to easily float on the liquid surface, reducing contact between the powder and the acid solution and, too many pores lead to a lower density of the powder, making it easier to float on the liquid surface and reducing the contact with the acid solution. Therefore, an appropriate range for BET exists, which is conducive to improving the metal leaching rate of recycled material powder from lithium-ion batteries during the hydrometallurgy process.

On the other hand, an excessively low BET indicates a large particle size of the recycled material powder from lithium-ion batteries and limited internal pore structure. This is typically caused by a high degree of agglomeration of the recycled material powder from lithium-ion batteries (the residual organic matter or the amorphous carbon obtained after the carbonization of the residual organic matter serves as a binder to hold the powder together), which makes component separation difficult and results in a lower purity of the separated products. An excessively high BET indicates excessively small particle size of the recycled material powder from lithium-ion batteries or excessive porosity (the more pores there are, the higher the degree of deviation from the true density). Because the graphite typically has lower density and smaller particle size than the cathode material, an excessively high BET can reduce the difference between graphite and cathode material, making it difficult to separate the cathode and anode materials in the recycled material powder from lithium-ion batteries based on differences in density or mass, and resulting in poor controllability. Therefore, an appropriate range for BET exists, which is conducive to improving the separation of cathode and anode materials in the recycled material powder from lithium-ion batteries.

Because W_{DOC} and BET exert similar influences on both metal leaching rate and separation efficiency of cathode and anode materials, the separation index S=W_{DOC}×BET comprehensively reflects the separation performance of each component in the recycled material powder from lithium-ion batteries, and the recycled material powder from lithium-ion batteries with a separation index S satisfying 0.15 m²/kg≤S≤43 m²/kg exhibits a good separation efficiency for cathode and anode materials and a high metal leaching rate.

It should be pointed out that W_{DOC} refers to an organic carbon content of the recycled material powder from lithium-ion batteries dissolved or dispersed in an aqueous solution. The aqueous solution includes an aqueous solution with a pH range of 1-14. Experimental results show that the W_{DOC} of the recycled material powder from lithium-ion batteries varies with pH value. Because the acid leaching of hydrometallurgy is typically carried out at a pH of 3 or less, while the flotation separation is typically carried out at a pH above 7, determining W_{DOC} of the recycled material powder from lithium-ion batteries across various pH ranges is conducive to comprehensive evaluation of its separation index.

It should be noted that the recycled material powder from lithium-ion batteries falls within the scope of protection defined in the present disclosure as along as its separation index S, measured at any pH within the range of 1 to 14, satisfies 0.15 m²/kg≤S≤43 m²/kg. For example, a recycled material powder from lithium-ion batteries for which the separation index S falls within 0.15 m²/kg≤S≤43 m²/kg at pH ≤ 3 but lies outside the range of 0.15 m²/kg≤S≤43 m²/kg at pH ≥ 10 is nevertheless within the scope of protection of the present disclosure.

In some embodiments, when the pH of the aqueous solution is ≤ 3, the separation index S of the recycled material powder from lithium-ion batteries satisfies 2 m²/kg≤S≤24 m²/kg. Within this range, the recycled material powder from lithium-ion batteries exhibits a good metal leaching rate during the acid leaching process of hydrometallurgy, which is conducive to improving the metal recovery rate in hydrometallurgy. In some embodiments, the separation index S of the recycled material powder from lithium-ion batteries may be 2.03 m²/kg≤S≤10.2 m²/kg, 10.2 m²/kg≤S≤15 m²/kg, and 15 m²/kg≤S≤23.95 m²/kg, etc., or any value within these ranges.

In some embodiments, when the pH of the aqueous solution is ≥ 10, the separation index S of the recycled material powder from lithium-ion batteries satisfies 13 m²/kg≤S≤40 m²/kg. Within this range, the recycled material powder from lithium-ion batteries demonstrates a good separation efficiency in flotation separation of the cathode and anode materials, which is thus conducive to improving the recovery and utilization rate of the cathode and anode materials. In some embodiments, the separation index S of the recycled material powder from lithium-ion batteries may be 13 m²/kg≤S≤20 m²/kg, 20 m²/kg≤S≤26.5 m²/kg and 26.5 m²/kg≤S≤38.6 m²/kg, etc., or any value within these ranges.

In some embodiments, the W_{DOC} of the recycled material powder from lithium-ion batteries is less than or equal to 15‰, and the recycled material powder from lithium-ion batteries within this W_{DOC} range has good metal leaching rate and separation efficiency for cathode and anode materials. In some embodiments, the W_{DOC} of the recycled material powder from lithium-ion batteries may be in the ranges of 0-0.6‰, 0.6‰-1.7‰, 1.7‰-2.8‰, 5‰-9.5‰, and 7‰-13.5‰, etc., or any value within these ranges.

In some embodiments, a mass percentage of an iron element in the recycled material powder from lithium-ion batteries is 10%-30%, and the W_{DOC} is less than 3‰. In some embodiments, the mass percentage of the iron element in the recycled material powder from lithium-ion batteries may be in the ranges of 10%-15%, 15%-20%, and 20%-30%, etc., or any value within these ranges.

In some embodiments, a mass percentage of a cobalt element in the recycled material powder from lithium-ion batteries is in a range of 1% to 50%, and the W_{DOC} is in a range of 5‰ to 15‰. In some embodiments, the mass percentage of the cobalt element in the recycled material powder from lithium-ion batteries may be in the ranges of 1%-5%, 5%-10%, 10%-30%, and 30%-50%, etc., or any value within these ranges.

In some embodiments, when the pH of the aqueous solution is ≤ 3, the W_{DOC} of the recycled material powder from lithium-ion batteries is less than 10‰.

In some embodiments, when the pH value of the aqueous solution is ≥ 10, the W_{DOC} of the recycled material powder from lithium-ion batteries is in a range of 7‰ to 14‰.

In some embodiments, the BET of the recycled material powder from lithium-ion batteries satisfies 1 m²/g≤BET≤15 m²/g.

In some embodiments, the mass percentage of the iron element in the recycled material powder from lithium-ion batteries is in a range of 10% to 30%, and the BET of the recycled material powder from lithium-ion batteries is in a range of 10-15 m²/g.

In some embodiments, the mass percentage of the cobalt element in the recycled material powder from lithium-ion batteries is in a range of 1% to 50%, and the BET of the recycled material powder from lithium-ion batteries is in a range of 1-3 m²/g.

In some embodiments, the recycled material powder from lithium-ion batteries has a Dv50 in a range of 0.6-16 µm. The particle size of the recycled material powder from lithium-ion batteries has an impact on its BET. The smaller the particle size, the larger the BET, that is, the larger the separation index S; while the larger the particle size, the smaller the BET, that is, the smaller the separation index S. In some embodiments, the Dv50 of the recycled material powder from lithium-ion batteries may be in the ranges of 0.6-4.08 µm, 4.08-7.64 µm, 7.64-10 µm, and 10-16 µm, etc., or any value within these ranges.

In some embodiments, the recycled material powder from lithium-ion batteries has a Dv10 in a range of 0.1-1.5 µm, for example 0.1-0.73 µm, 0.74-0.93 µm, and 1.0-1.5 µm, etc., or any value within these ranges. The recycled material powder from lithium-ion batteries with Dv10 within this range can avoid excessively high or low BET, thereby affecting its application performance. For example, excessive powder floating on the liquid surface and consequent reduction in the metal leaching rate during hydrometallurgy can be avoided.

In some embodiments, the Dv10 of the recycled material powder from lithium-ion batteries is in a range of 0.5-5.2 µm, for example, 0.5-1.5 µm, 1.52-2.32 µm, and 2.32-5.2 µm, etc., or any value within these ranges. The recycled material powder from lithium-ion batteries with Dv10 within this range can avoid excessively high or low BET, thereby affecting its application performance. For example, excessive powder floating on the liquid surface and consequent reduction in the metal leaching rate during hydrometallurgy can be avoided.

In some embodiments, a mass percentage of a lithium element in the recycled material powder from lithium-ion batteries is in a range of 0%-10%. For example, the mass percentage of the lithium element in the recycled material powder from lithium-ion batteries may be in the ranges of 1%-3%, 3%-5%, and 5%-10%, etc., or any value within these ranges.

The present disclosure provides a preparation method of the recycled material powder from lithium-ion batteries in any of the above embodiments, aiming to remove the organic matter as much as possible during the preparation process and control the process conditions to make the recycled material powder from lithium-ion batteries have an appropriate BET and a separation index S satisfying the requirements.

Specifically, the preparation may be carried out by the following methods, which are not limited to the methods provided in the embodiments of the present disclosure.

A preparation method of the recycled material powder from lithium-ion batteries, including the following steps:
providing a crude recycled material from lithium-ion batteries comprising a anode material, a cathode material, and organic matter;
subjecting the crude recycled material from lithium-ion batteries to photocatalytic oxidation treatment to obtain a photocatalytically treated intermediate;
subjecting the photocatalytically treated intermediate to flash drying to obtain a dried intermediate;
subjecting the dried intermediate to heat treatment to obtain a heat-treated intermediate; and
cooling the heat-treated intermediate to 20°C or less under an inert atmosphere to obtain a cooled intermediate, and then shredding and sieving the cooled intermediate successively to obtain the recycled material powder from lithium-ion batteries.

In some embodiments, the cathode material includes at least one selected form the group consisting of lithium cobalt oxide, lithium manganese oxide, lithium nickel oxide, lithium nickel cobalt manganese oxide, lithium nickel cobalt aluminum oxide, and lithium iron phosphate.

In some embodiments, the anode material includes graphite.

In some embodiments, the organic matter includes a polymeric compound obtained through an addition reaction of carbon-carbon unsaturated bonds and an organic solvent. In some embodiments, the polymeric compound includes, but is not limited to, at least one selected form the group consisting of polyvinylidene fluoride (PVDF), polyacrylonitrile (PAN), polyacrylic acid (PAA), polyethylene (PE), and polypropylene (PP), and the organic solvent includes, but is not limited to, at least one selected form the group consisting of ethylene carbonate, propylene carbonate, butylene carbonate, pentylene carbonate, dimethyl carbonate, diethyl carbonate, dipropyl carbonate, and ethyl methyl carbonate. The polymeric compound in the crude recycled material from lithium-ion batteries is usually a main component of the binder and separator; and the organic solvent in the crude recycled material from lithium-ion batteries is usually a main component of the electrolytic solution.

The recycled material powder from lithium-ion batteries is treated by the preparation method provided in the present disclosure combined with the photocatalytic oxidation and heat treatment methods, and a cooling stage of the heat-treated material is controlled, which greatly reduces the energy consumption and improves the efficiency, such that a recycled material powder from lithium-ion batteries with lower W_{DOC} and appropriate BET is obtained.

The crude recycled material from lithium-ion batteries is treated by combining the photocatalytic oxidation and the heat treatment methods in the present disclosure, with the aim of removing the organic matter therein under milder and economical conditions, and reducing the W_{DOC} of the recycled material powder from lithium-ion batteries.

The photocatalytic oxidation method used in the present disclosure comprises irradiating a photocatalyst(such as titanium dioxide, and zinc oxide, etc) with ultraviolet light. After the photocatalyst absorbs photons, the electrons in the valence band transition to the conduction band to generate electron-hole pairs, and the transition electrons reduce the oxygen adsorbed on the surface of the photocatalyst, generating superoxide anion free radicals (·O₂⁻), while the remaining holes can oxidize the water adsorbed on the surface of the photocatalyst, generating hydroxyl radicals (·OH). The generated free radicals can react with the organic matter adsorbed on the surface of the photocatalyst, oxidizing and breaking their chemical bonds to cause their degradation. During the generation of free radicals, the transition electrons in the photocatalyst return to the valence band. Compared with the Fenton oxidation method for degrading organic matter to recycle the waste batteries, the ultraviolet light catalytic oxidation degradation method used in the present disclosure does not require the use of chemicals or additional post-treatment, the reaction conditions are mild, which can greatly reduce the costs.

However, due to the limited ability of oxidation method to degrade the organic matter, it can only degrade the polymer segments into fragments, further heat treatment is required to completely decompose the organic matter. The heat treatment is carried out after oxidation, which can greatly improve the efficiency of heat treatment, allowing both the temperature and duration to be reduced.

In the present disclosure, the flash drying treatment is carried out on the photocatalytically treated intermediate, and the organic matter, especially binders, in the crude recycled material from lithium-ion batteries is degraded after the phototreatment, losing most of its adhesive force. The materials are dispersed by convective contact with high-speed hot airflow (hot air) during flash drying treatment, exposing the organic matter on the surface of the particles, which is conducive to complete removal in the subsequent heat treatment stage. Moreover, the high-speed hot airflow (hot air) in contact with the materials rapidly evaporates the moisture or solvent in the materials, thereby achieving rapid drying. Performing heat treatment after drying prevents violent expansion or fracture caused by rapid evaporation of water at high temperatures, thereby avoiding an increase in specific surface area.

The photocatalytic oxidation treatment refers to ultraviolet irradiation of the crude recycled material from lithium-ion batteries in an oxygen-containing and/or aqueous environment in the presence of a photocatalyst. In some embodiments, the photocatalyst includes at least one of titanium dioxide or zinc oxide.

In some embodiments, the photocatalyst is anatase titanium dioxide.

In some embodiments, the photocatalyst has a particle size of less than 500 nm and is supported on at least one of the following carriers, including but not limited to aluminum foil, ceramic, glass, silica, molecular sieve, and screen mesh, with the aim of facilitating the separation of the photocatalytically treated intermediate from the photocatalyst. A photocatalyst with a smaller particle size is conducive to increasing its specific surface area, increasing the active sites for photocatalytic oxidation reactions, thereby improving the efficiency of photocatalytic oxidation treatment. Because the photocatalyst is a powder material with a smaller particle size, in order to facilitate its separation from the photocatalytically treated intermediate and achieve the recycling of the photocatalyst, the photocatalyst is supported on a carrier. In the present disclosure, the carrier and the supporting method of a photocatalyst is not limited, for example, a photocatalyst can be supported on a carrier in the form of a film, sheet, plate, large particle, or the like.

In some embodiments, conditions of the ultraviolet irradiation include a light wavelength of 200-400 nm and an irradiation duration of 5-15 h. The shorter the light wavelength, the greater the energy, but a light wavelength below 200 nm belongs to vacuum ultraviolet and cannot be used normally in an air environment. The commonly used wavelength range for photochemical reactions is 200-400 nm, with 254 nm being the most commonly used wavelength in an ultraviolet reaction device. The irradiation duration has an impact on the degradation degree of the organic matter, and the longer the irradiation duration, the higher the degradation degree.

In some embodiments, the photocatalytic oxidation treatment is conducted at an environmental humidity maintained at 60% to 100%, and an environmental oxygen content maintained 30 vt% or more. According to the principle, the photocatalytic oxidation treatment needs to be carried out under oxygen-containing conditions, and an aqueous environment can further promote the oxidation reaction. Therefore, the higher the humidity and oxygen content in the environment, the more favorable it is for the photocatalytic oxidation reaction to proceed.

In some embodiments, the flash drying is carried out at an inlet air temperature of 200-400 °C, an outlet air temperature of 100-200 °C, a rotation speed of 10-30 Hz, and a feed frequency of 10-30 Hz.

In some embodiments, the heat treatment is carried out under negative pressure at a pressure of -0.01 to -0.05 MPa, and the negative pressure is conducive to the gasification and overflow of the organic matter and amorphous carbon, while reducing the pore structure.

In some embodiments, the heat treatment is carried out at a temperature of 350°C to 500°C for a duration of 0.5-1.5 h.

By controlling the conditions of heat treatment, including furnace pressure, oxygen content, temperature, and time, the BET of the recycled material powder from lithium-ion batteries can be controlled, to obtain a powder with an appropriate BET range.

In some embodiments, a cooling rate is 1-6 °C/min. Controlling the cooling rate to be relatively low can avoid accumulation of internal stress in powder particles, which is conducive to stable shrinkage of pore size, thereby avoiding lattice defects and particle cracking, and effectively controlling the BET of the recycled material powder from lithium-ion batteries.

In some embodiments, the material is subjected to heat treatment under negative pressure. The negative pressure is conducive to the gasification and overflow of organic matter, reducing the pore structure of the material after heat treatment. Controlling the cooling rate of the heat-treated material to be relatively low can, on the one hand, avoid recombination of the recycled material powder from lithium-ion batteries with volatile substances in the environment to form contaminating carbon sources; on the other hand, avoid lattice defects in the cathode active material in the recycled material powder from lithium-ion batteries, which may affect the regeneration. Furthermore, a relatively low cooling rate can prevent cracking of powder caused by rapid cooling and thus increased porosity, while also facilitating control of the specific surface area.

In some embodiments, the temperature is reduced to 20°C or less at a cooling rate of 1-6°C/min, which is conducive to stabilizing the pores of the powder material particles and causing slow shrinkage.

In some embodiments, a particle size of the crude recycled material from lithium-ion batteries is less than 1 cm.

In some embodiments, the crude recycled material from lithium-ion batteries is obtained by mechanically comminuting the battery waste through disassembly, stamping, grinding, and shearing, etc.

In some embodiments, the battery waste includes, but is not limited to, spent batteries, spent battery cells, spent battery jelly rolls, electrode sheet wastes, and off-spec batteries on the production lines, etc.

In some embodiments, light fractions of the battery waste such as plastic, aluminum foil, and copper foil, are removed through methods such as air classification, sieving, density separation, and optical sorting, etc.

In some embodiments, bulky fractions of the battery waste such as casings, wires, and sealing plates can be separated manually or automatically. For example, the magnetic components can be separated by a magnetic separator, while non-magnetic metals can be separated by an eddy current separator.

The present disclosure provides use of the recycled material powder from lithium-ion batteries as described in any of the above embodiments.

The recycled material powder from lithium-ion batteries is used in hydrometallurgy, and the hydrometallurgy includes the steps of dispersing the recycled material powder from lithium-ion batteries in an acid solution to obtain an acid-leachate containing metal ions.

In some embodiments, the acid-leachate is subjected to steps including but not limited to impurity removal, extraction, precipitation, and drying, etc., to obtain a product enriched in valuable metal elements including at least one selected from the group consisting of nickel, cobalt, manganese, lithium, and iron.

In some embodiments, the acid-leachate is subjected to steps including but not limited to impurity removal and extraction, etc., to obtain an aqueous solution enriched with metal salts; and the metal salts include at least one selected from the group consisting of nickel salt, cobalt salt, manganese salt, and lithium salt.

In some embodiments, the acid-leachate is subjected to steps including but not limited to impurity removal, precipitation, carbonation, and drying, etc., to obtain lithium carbonate.

The recycled material powder from lithium-ion batteries is used in regeneration of a cathode material, and the regeneration of the cathode material includes the steps of enriching the cathode material in the recycled material powder from lithium-ion batteries by flotation separation, adding a lithium source to the cathode material and calcining a resulting mixture to obtain a regenerated cathode material.

The recycled material powder from lithium-ion batteries is used in recycling of graphite, and the recycling of graphite includes the steps of enriching the graphite in the recycled material powder from lithium-ion batteries by flotation separation so as to recycle the graphite.

In some embodiments, the graphite is subjected to heat treatment to obtain a regenerated anode material.

In some embodiments, the graphite is used to prepare graphene.

The present disclosure provides a hydrometallurgy method including dispersing the recycled material powder from lithium-ion batteries of any of the above embodiments in an acid solution to obtain an acid-leachate containing metal ions.

In some embodiments, the acid-leachate is subjected to steps including but not limited to impurity removal, extraction, precipitation, and drying, etc., to obtain a product enriched in valuable metal elements including at least one selected from the group consisting of nickel, cobalt, manganese, lithium, and iron.

In some embodiments, the acid-leachate is subjected to steps including but not limited to impurity removal and extraction, etc., to obtain an aqueous solution enriched with metal salts; and the metal salts include at least one selected from the group consisting of nickel salt, cobalt salt, manganese salt, and lithium salt.

In some embodiments, the acid-leachate is subjected to steps including, but not limited to, impurity removal, precipitation, carbonation, and drying, etc., to obtain lithium carbonate.

The present disclosure provides a regeneration method for a cathode material, including enriching the cathode material in the recycled material powder from lithium-ion batteries of any of the above embodiments by flotation separation, adding a lithium source to the cathode material and calcining a resulting mixture to obtain a regenerated cathode material.

The present disclosure provides a recycling method for graphite including enriching graphite in the recycled material powder from lithium-ion batteries of any of the above embodiments by flotation separation so as to recycle the graphite.

The features and performance of the present disclosure are further described in detail below in conjunction with the Examples.

### Example 1

A preparation method of a recycled material powder from lithium-ion batteries included the following steps:
(1) Obtaining a crude recycled material from lithium-ion batteries: a discharged spent ternary lithium-ion aluminum-cased battery was sequentially subjected to dual-shaft shredding and single-shaft shredding under the protection of nitrogen, a resulting shredded material was dried for 2 h in a nitrogen atmosphere at 140-150°C, then dispersed using a deagglomerator and sieved to obtain an oversize fraction (protective casings) and an undersize fraction. The undersize fraction was sieved using a circular vibrating sieve to obtain an undersize product which was a primary crude recycled material from lithium-ion batteries. The oversize fraction was sequentially subjected to zigzag air classification, and linear sieve airflow classification to separate out the separator and the aluminum casing. The remaining material was further subjected to single-shaft shredding, followed by sieving using a circular vibrating sieve to obtain an undersieve product which was a secondary crude recycled material from lithium-ion batteries. The primary crude recycled material from lithium-ion batteries and the secondary crude recycled material from lithium-ion batteries were combined to obtain the crude recycled material from lithium-ion batteries.
(2) Obtaining a photocatalytically treated intermediate: the crude recycled material from lithium-ion batteries was evenly distributed on a carrier rack of a photocatalytic oxidation device, and then subjected to irradiation with ultraviolet light for 10 h. The carrier rack was an aluminum foil having a surface coated with active titanium dioxide, the active titanium dioxide was anatase titanium dioxide with a particle size below 500 nm, and a loading amount of the active titanium dioxide on the aluminum foil was 15±2 g/m². The ultraviolet light had a wavelength of 254 nm and was provided by a UVC lamp of 15 W. A distance between the lamp and the carrier rack was 30 cm to 50 cm. The photocatalytic oxidation device was controlled to have a humidity of 80% to 90% and an oxygen content of 60 vt% to 70 vt%.
(3) Obtaining a dried intermediate: the photocatalytically treated intermediate was dried in a flash dryer, to obtain a dried intermediate. The flash dryer was set as follows: at an inlet air temperature of 300°C, an outlet air temperature of 150°C, a rotation speed of 20 Hz, and a feed frequency of 10 Hz.
(4) Obtaining a heat-treated intermediate: the dried intermediate was placed in a sintering furnace for heat treatment, with a sintering temperature controlled to 450°C, a heating rate of 5°C/min, a furnace pressure of -0.03 MPa, and a treatment duration of 1 h.
(5) Obtaining a recycled material powder from lithium-ion batteries: after the heat treatment was completed, the sintering furnace was maintained at a negative pressure and the cooling rate was set to 3°C/min to cool the material to 20°C. The material was then deagglomerated using a deagglomerator and sieved to obtain the recycled material powder from lithium-ion batteries.

### Example 2

A preparation method of a recycled material powder from lithium-ion batteries included the following steps:
(1) Obtaining a crude recycled material from lithium-ion batteries: a discharged spent ternary lithium-ion aluminum-cased battery was finely disassembled to obtain a battery cell; the battery cell was sequentially subjected to dual-shaft shredding, and impact crushing, and then sieved by a linear sieve to obtain an undersieve product which was the crude recycled material from lithium-ion batteries.
(2) Obtaining a photocatalytically treated intermediate: the photocatalytic oxidation device was controlled to have a humidity of 60% to 70% and an oxygen content of 60 vt% to 70 vt%, and the other procedures were the same as those in Example 1.
(3) Obtaining a dried intermediate: the procedures were the same as those in Example 1.
(4) Obtaining a heat-treated intermediate: the sintering temperature was controlled to 400°C, the heating rate was 5°C/min, the furnace pressure was -0.05 MPa, and the other procedures were the same as those in Example 1.
(5) Obtaining a recycled material powder from lithium-ion batteries: the sintering furnace was maintained at a negative pressure and the cooling rate was set to 1°C/min, and the other procedures were the same as those in Example 1.

### Example 3

A preparation method of a recycled material powder from lithium-ion batteries included the following steps:
(1) Obtaining a crude recycled material from lithium-ion batteries: the procedures were the same as those in Example 1.
(2) Obtaining a photocatalytically treated intermediate: the crude recycled material from lithium-ion batteries was evenly distributed on a carrier rack of a photocatalytic oxidation device, and then subjected to irradiation with ultraviolet light for 5 h.

The carrier rack was a glass plate having a surface coated with active zinc oxide, the active zinc oxide was active zinc oxide with a particle size below 500 nm, and a loading amount of the active zinc oxide on the glass plate was 25±2 g/m².

The ultraviolet light had a wavelength of 254 nm and was provided by a UVC lamp of 15 W. The distance between the lamp and the carrier rack was 30 cm to 50 cm.

The photocatalytic oxidation device was controlled to have a humidity of 60% to 70% and an oxygen content of 30 vt% to 40 vt%.

(3) Obtaining a dried intermediate: the photocatalytically treated intermediate was dried in a flash dryer, to obtain a dried intermediate. The flash dryer was set as follows: at an inlet air temperature of 300°C, an outlet air temperature of 150°C, a rotation speed of 10 Hz, and a feed frequency of 30 Hz.

(4) Obtaining a heat-treated intermediate: the dried intermediate was placed in a sintering furnace for heat treatment, with a sintering temperature controlled to 350°C, a heating rate of 5°C/min, a furnace pressure of -0.01 MPa, and a treatment duration of 1 h.

(5) Obtaining a recycled material powder from lithium-ion batteries: the sintering furnace was maintained at a negative pressure and the cooling rate was set to 6°C/min, and the other procedures were the same as those in Example 1.

### Example 4

A preparation method of a recycled material powder from lithium-ion batteries included the following steps:
(1) obtaining a crude recycled material from lithium-ion batteries: a discharged spent ternary lithium-ion pouch battery was sequentially subjected to dual-shaft shredding and auger shredding under the protection of nitrogen, a resulting shredded material was dried for 2 h in a nitrogen atmosphere at 140-150°C, then pneumatically conveyed by a cyclone to a vibrating sieve for sieving to obtain an undersieve product which was the primary crude recycled material from lithium-ion batteries and an oversieve product. The oversieve product was subjected to magnetic separation to obtain a secondary crude recycled material from lithium-ion batteries. The primary crude recycled material from lithium-ion batteries and the secondary crude recycled material from lithium-ion batteries were combined to obtain the crude recycled material from lithium-ion batteries.
(2) Obtaining a photocatalytically treated intermediate: the crude recycled material from lithium-ion batteries was subjected to irradiation with ultraviolet light for 15 h, and the other procedures were the same as those in Example 1.
(3) Obtaining a dried intermediate: the procedures were the same as those in Example 1.
(4) Obtaining a heat-treated intermediate: the sintering temperature was controlled to 400°C, the furnace pressure was -0.01 MPa, and the other procedures were the same as those in Example 1.
(5) Obtaining a recycled material powder from lithium-ion batteries: the sintering furnace was maintained at a negative pressure and the cooling rate was set to 6°C/min, and the other procedures were the same as those in Example 1.

### Example 5

A preparation method of a recycled material powder from lithium-ion batteries included the following steps:
(1) obtaining a crude recycled material from lithium-ion batteries: the processes were the same as those in Example 2, but a different spent ternary lithium-ion aluminum-cased battery was used.
(2) Obtaining a photocatalytically treated intermediate: the crude recycled material from lithium-ion batteries was subjected to irradiation with ultraviolet light for 8 h, and the other procedures were the same as those in Example 1.
(3) Obtaining a dried intermediate: the photocatalytically treated intermediate was dried in a flash dryer, to obtain a dried intermediate. The flash dryer was set as follows: an inlet air temperature of 300°C, an outlet air temperature of 100°C, a rotation speed of 30 Hz, and a feed frequency of 30 Hz.
(4) Obtaining a heat-treated intermediate: the sintering temperature was controlled to 350°C, the furnace pressure was -0.03 MPa, and the other procedures were the same as those in Example 1.
(5) Obtaining a recycled material powder from lithium-ion batteries: the sintering furnace was maintained at a negative pressure and the cooling rate was set to 6°C/min, and the other procedures were the same as those in Example 1.

### Example 6

A preparation method of a recycled material powder from lithium-ion batteries included the following steps:
(1) Obtaining a crude recycled material from lithium-ion batteries: a discharged spent ternary lithium-ion aluminum-cased battery was sequentially subjected to dual-shaft shredding and single-shaft shredding under the protection of nitrogen, a resulting shredded material was dried for 2 h in a nitrogen atmosphere at 140-150°C, then deagglomerated using a deagglomerator and sieved to obtain an oversize fraction (protective casings) and an undersize fraction. The undersize fraction was sieved using a circular vibrating sieve, to obtain an underseive product which was a crude recycled material from lithium-ion batteries.
(2) Obtaining a photocatalytically treated intermediate: the crude recycled material from lithium-ion batteries was evenly distributed on a carrier rack of a photocatalytic oxidation device, and then subjected to irradiation with ultraviolet light for 12 h.

The carrier rack was a glass plate having a surface coated with active zinc oxide, the active zinc oxide was active zinc oxide with a particle size below 500 nm, and a loading amount of the active zinc oxide on the glass plate was 25±2 g/m².

The ultraviolet light had a wavelength of 254 nm and was provided by a UVC lamp of 15 W. The distance between the lamp and the carrier rack was 30 cm to 50 cm.

The photocatalytic oxidation device was controlled to have a humidity of 80% to 90% and an oxygen content of 60 vt% to 70 vt%.

(3) Obtaining a dried intermediate: the photocatalytically treated intermediate was dried in a flash dryer, to obtain a dried intermediate. The flash dryer was set as follows: an inlet air temperature of 400°C, an outlet air temperature of 200°C, a rotation speed of 10 Hz, and a feed frequency of 20 Hz.

(4) Obtaining a heat-treated intermediate: the dried intermediate was placed in a sintering furnace for heat treatment with a sintering temperature controlled to 500°C, h, a heating rate of 5°C/min, a furnace pressure of -0.02 MPa, and a treatment duration of 1 h.

(5) Obtaining a recycled material powder from lithium-ion batteries: the procedures were the same as those in Example 1.

### Example 7

A preparation method of a recycled material powder from lithium-ion batteries included the following steps:
(1) Obtaining a crude recycled material from lithium-ion batteries: a discharged spent lithium iron phosphate battery was subjected to two-stage shredding (with the first stage being a dual-shaft shredding, and the second stage being a single-shaft shredding) under the protection of nitrogen, a resulting shredded material was dried for 2 h in a nitrogen atmosphere at 140-150°C, then deagglomerated using a deagglomerator and sieved to obtain an oversize fraction (protective casings) and an undersize fraction. The undersize fraction was sieved using a circular vibrating sieve to obtain an underseive product which was a crude recycled material from lithium-ion batteries.
(2) Obtaining a photocatalytically treated intermediate: the crude recycled material from lithium-ion batteries was evenly distributed on a carrier rack of a photocatalytic oxidation device, and then subjected to irradiation with ultraviolet light for 12 h.

The carrier rack was a glass plate having a surface coated with active zinc oxide, the active zinc oxide was active zinc oxide with a particle size below 500 nm, and a loading amount of the active zinc oxide on the glass plate was 25±2 g/m².

The ultraviolet light had a wavelength of 254 nm and was provided by a UVC lamp of 15 W. The distance between the lamp and the carrier rack was 30 cm to 50 cm.

The photocatalytic oxidation device was controlled to have a humidity of 80% to 90% and an oxygen content of 60 vt% to 70 vt%.

(3) Obtaining a dried intermediate: the photocatalytically treated intermediate was dried in a flash dryer, to obtain a dried intermediate. The flash dryer was set as follows: an inlet air temperature of 200°C, an outlet air temperature of 100°C, a rotation speed of 20 Hz, and a feed frequency of 10 Hz.

(4) Obtaining a heat-treated intermediate: the dried intermediate was placed in a sintering furnace for heat treatment, with a sintering temperature controlled to 500°C, a heating rate of 5°C/min, a furnace pressure of -0.05 MPa, and a treatment duration of 0.5 h.

(5) Obtaining a recycled material powder from lithium-ion batteries: after the heat treatment was completed, the sintering furnace was maintained at a negative pressure, and the cooling rate was set to 4°C/min to cool the material to 20°C. The material was then deagglomerated using a deagglomerator and then sieved to obtain the recycled material powder from lithium-ion batteries.

### Example 8

A preparation method of a recycled material powder from lithium-ion batteries included the following steps:
(1) Obtaining a crude recycled material from lithium-ion batteries: the procedures were the same as those in Example 7.
(2) Obtaining a photocatalytically treated intermediate: the crude recycled material from lithium-ion batteries was evenly distributed on a carrier rack of a photocatalytic oxidation device, and then subjected to irradiation with ultraviolet light for 10 h.

The carrier rack was an aluminum foil having a surface coated with active titanium dioxide, the active titanium dioxide was anatase titanium dioxide with a particle size below 500 nm, and a loading amount of the active titanium dioxide on the aluminum foil was 15±2 g/m².

The ultraviolet light had a wavelength of 254 nm and was provided by a UVC lamp of 15 W. The distance between the lamp and the carrier rack was 30 cm to 50 cm.

The photocatalytic oxidation device was controlled to have a humidity of 60% to 70% and an oxygen content of 30 vt% to 40 vt%.

(3) Obtaining a dried intermediate: the procedures were the same as those in Example 7.

(4) Obtaining a heat-treated intermediate: the sintering temperature was controlled to 450°C, the treatment duration was 1 h, and the other procedures were the same as those in Example 6.

(5) Obtaining a recycled material powder from lithium-ion batteries: the procedures were the same as those in Example 7.

### Example 9

A preparation method of a recycled material powder from lithium-ion batteries included the following steps:
(1) Obtaining a crude recycled material from lithium-ion batteries: the procedures were the same as those in Example 7.
(2) Obtaining a photocatalytically treated intermediate: the crude recycled material from lithium-ion batteries was evenly distributed on a carrier rack of a photocatalytic oxidation device, and then subjected to irradiation with ultraviolet light for 15 h.

The carrier rack was an aluminum foil having a surface coated with active titanium dioxide, the active titanium dioxide was anatase titanium dioxide with a particle size below 500 nm, and a loading amount of the active titanium dioxide on the aluminum foil was 15±2 g/m².

The ultraviolet light had a wavelength of 254 nm and was provided by a UVC lamp of 15 W. The distance between the lamp and the carrier rack was 30 cm to 50 cm.

The photocatalytic oxidation device was controlled to have a humidity of 60% to 70% and an oxygen content of 60 vt% to 70 vt%.

(3) Obtaining a dried intermediate: the procedures were the same as those in Example 7.

(4) Obtaining a heat-treated intermediate: the sintering temperature was controlled to 450°C, the furnace pressure was -0.01 MPa, the treatment duration was 1.5 h, and the other procedures were the same as those in Example 7.

(5) Obtaining a recycled material powder from lithium-ion batteries: the procedures were the same as those in Example 7.

### Example 10

The difference from Example 1 lied in that the irradiation in step (2) was carried out for 15 h.

### Example 11

The difference from Example 1 lied in that the irradiation in step (2) was carried out for 5 h.

### Example 12

The difference from Example 1 lied in that the furnace pressure in step (4) was -0.01 MPa.

### Example 13

The difference from Example 1 lied in that the furnace pressure in step (4) was -0.05 MPa.

### Example 14

The difference from Example 1 lied in that the cooling rate in step (5) was 1°C/min.

### Example 15

The difference from Example 1 lied in that the cooling rate in step (5) was 6°C/min.

### Example 16

The difference from Example 1 lied in that the step (3) was not carried out, that is, the photocatalytically treated intermediate was directly subjected to heat treatment.

### Example 17

The difference from Example 1 lied in that the step (2) was not carried out, that is, the crude recycled material from lithium-ion batteries obtained in step (1) was directly subjected to step (3).

### Example 18

A preparation method of a recycled material powder from lithium-ion batteries included the following steps:
(1) Obtaining a crude recycled material from lithium-ion batteries: a discharged spent ternary lithium-ion aluminum-cased battery was finely disassembled to obtain a cathode sheet, and the cathode sheet was subjected to shredding and classification, and then sieved to obtain the crude recycled material from lithium-ion batteries.

Steps (2) to (5) were the same as those in Example 1.

### Example 19

A preparation method of a recycled material powder from lithium-ion batteries included the following steps:
(1) Obtaining a crude recycled material from lithium-ion batteries: a discharged spent lithium iron phosphate aluminum-cased battery was finely disassembled to obtain a cathode sheet, and the cathode sheet was subjected to shredding and classification, and then sieved to obtain the crude recycled material from lithium-ion batteries.

Steps (2) to (3) were the same as those in Example 7.

(4) Obtaining a heat-treated intermediate: the dried intermediate was placed in a sintering furnace for heat treatment, with a sintering temperature controlled to 700°C, a heating rate of 5°C/min, a furnace pressure of 0.02 MPa, and a treatment duration of 1.5 h.

Step (5) was the same as that in Example 7.

### Example 20

A preparation method of recycled material powder from lithium-ion batteries included the following steps:
Steps (1) to (2) were the same as those in Example 7.

(3) Obtaining a ball milled intermediate: the photocatalytically treated intermediate was put into a ball mill for ball milling 1 h to obtain the ball milled intermediate.

(4) Obtaining a heat-treated intermediate: the ball milled intermediate was placed in a sintering furnace for heat treatment, with a sintering temperature controlled to 500°C, a heating rate of 5°C/min, a furnace pressure of -0.05 MPa, and a treatment duration of 0.5 h.

(5) Obtaining a recycled material powder from lithium-ion batteries: after the heat treatment was completed, the sintering furnace was maintained at a negative pressure and the cooling rate was set to 10°C/min to cool the material to 20°C. The material was then deagglomerated using a deagglomerator and sieved to obtain the recycled material powder from lithium-ion batteries.

### Comparative Example 1

The difference from Example 1 lied in that the heat treatment in step (4) was carried out at a temperature of 900°C, and the furnace pressure was -0.07 MPa.

### Comparative Example 2

The difference from Example 1 lied in that the heat treatment in step (4) was carried out under a normal pressure at a temperature of 300°C.

### Comparative Example 3

The difference from Example 1 lied in that the heat-treated intermediate of step (4) was exposed to air at a normal temperature (25°C) for natural cooling.

### Raw Material Description:

The battery waste used to obtain the crude recycled material from lithium-ion batteries was not necessarily the same, with differences including the battery cells, types of cathode materials in the cathode sheets, and a ratio of a cathode material and an anode material, etc.

The raw materials of the spent lithium iron phosphate batteries used in Examples 7-9 were the same, and the raw materials of the spent ternary batteries used in Examples 10-15 and Comparative Examples 1-3 were the same as those used in Example 1.

### Description of Photocatalytic Oxidation Treatment:

In the present disclosure, a preparation method of the carrier rack of the photocatalytic oxidation device is not limited. The purpose of the present disclosure can be achieved by any method for loading titanium dioxide or zinc oxide with photocatalytic oxidation activity on a carrier, and method enables easy separation of the photocatalytically treated intermediate from the carrier rack, and allows the carrier rack to be recycled.

The preparation method of the carrier rack for loading zinc oxide onto a glass plate includes, but is not limited to: weighing and dissolving a soluble zinc salt in anhydrous ethanol, adding with a complexing agent (including diethanolamine, citric acid, and ethanolamine, etc.) and stirring to obtain a sol, aging and then loading the sol onto the glass sheet by dip-coating, and finally sintering at 450-600°C for 30-60 min to obtain the carrier rack.

Taking Example 1 for illustration, the preparation method of the carrier rack of the photocatalytic oxidation device included: weighing and dissolving butyl titanate in anhydrous ethanol, adding with diethanolamine and stirring for 2 h, then adding with a 20 wt% of acetylacetone aqueous solution and continuously stirring for 1 h to obtain a titanium dioxide sol; and loading the titanium dioxide sol onto an aluminum foil having a thickness of 0.2 mm by dip-coating, and finally sintering at 500°C to obtain the carrier rack. By controlling the coating speed and frequency, as well as the concentration of titanium dioxide sol, the loading amount of the carrier rack can be controlled.

### Performance Testing Methods:

Test Example 1: W_{DOC} testing included the following steps:
1) Weighing 100.0 ± 0.01 g of the sample to be tested and placing it in a 500 mL extraction bottle, measuring 300 mL (V₀) of aqueous solution with a graduated cylinder and adding it into the extraction bottle, closing an inner cover tightly, screwing on a bottle cap, and then fixing the extraction bottle vertically on a thermostatic water-bath shaker;
2) Setting a water temperature of the thermostatic water-bath shaker to 25°C, a shaking frequency to 110 times/min, an amplitude to 20 mm, starting the thermostatic water-bath shaker and shaking for 60 min;
3) after the shaking was completed, removing the extraction bottle, homogenizing the sample by shaking, and filtering the sample with low-speed quantitative filter paper to obtain a filtrate for W_{DOC} testing; and
4) pipetting a certain volume (V₁) of the filtrate into a 100 mL volumetric flask, acidifying to pH ≤ 2, and diluting to the mark with water to obtain a diluent solution with a volume of V₂; after sparging to remove the inorganic carbon, introducing the solution into a high-temperature oxidation furnace of total organic carbon (TOC) analyzer to measure the concentration C. ${W}_{DOC} = \frac{\left({C}_{1}-{C}_{0}\right) \times {V}_{2} \times {V}_{0}}{m \times {V}_{1}} \times {10}^{- 3} \times 100 % ;$

In the formula, C₁ is a concentration of the sample to be tested as measured by the TOC analyzer, expressed in mg/L; C₀ is a concentration of a blank sample as measured by the TOC analyzer, expressed in mg/L; V₂ is a constant volume of diluent, expressed in mL; V₁ is the volume of filtrate pipetted in step 4), expressed in mL; V₀ is the volume of the aqueous solution initially added, expressed in L; m is a mass of the sample to be tested, expressed in g. The blank sample refers to the sample to which the sample to be tested was not added in step 1).

The aqueous solution in step 1) was one selected from the group consisting of a aqueous solution with a pH of 2, a aqueous solution with a pH of 7, and a aqueous solution with a pH of 10. The aqueous solution with a pH of 2 was prepared by dissolving 98% sulfuric acid in pure water, the aqueous solution with a pH of 10 was prepared by dissolving sodium hydroxide in pure water, and the aqueous solution with a pH of 7 was pure water.

Test Example 2: Specific surface area (BET) was measured in accordance with GB/T 19587-2004.

Test Example 3: Mass percentage contents of metal elements such as nickel (Ni), cobalt (Co), manganese (Mn), lithium (Li), and iron (Fe) in the recycled material powder from lithium-ion batteries were determined in accordance with YS/T1342.1-2019, YS/T1342.2-2019, YS/T1342.3-2019, YS/T1342.4-2019 and YS/T 1028.1-2015.

Test Example 4: Test for metal leaching efficiency included the following steps:
adding the recycled material powder from lithium-ion batteries to be tested into an acid leaching solution (a sulfuric acid solution with a volumteric concentration of hydrogen peroxide of 20% and with a pH value of 0.5-1) according to a solid-liquid ratio of 1g: 4g, stirring a resulting solution at 80°C for 6 h, and followed by solid-liquid separation to obtain an acid-leachate; and measuring a concentration of metal in the acid-leachate using inductively coupled plasma optical emission spectrometry (ICP-OES), and calculating a metal leaching rate according to the formula as follows. $Metal leaching rate = \frac{\left({c}_{N}+{c}_{C}+{c}_{M}+{c}_{L}+{c}_{F}\right) \times V}{{M}_{0} \times \left({β}_{N}+{β}_{C}+{β}_{M}+{β}_{L}+{β}_{F}\right)} \times 100 %$

In the formula, the metal leaching rate is a ratio of a total mass of metal elements (including at least one selected from the group consisting of Ni, Co, Mn, Fe, and Li) in the acid-leachate to the total mass of metal elements in the recycled material powder from lithium-ion batteries; c_{N}, c_{C}, c_{M}, c_{L} and c_{F} are concentrations of Ni, Co, Mn, Li, and Fe in the acid-leachate, respectively, expressed in g/L; V is a volume of the acid-leachate, expressed in L; M₀ is an addition amount of the recycled material powder from lithium-ion batteries, expressed in g; β_{N}, β_{C}, β_{M}, β_{L} and β_{F} are mass percentages of Ni, Co, Mn, Li, and Fe in the recycled material powder from lithium-ion batteries, respectively, expressed in %.

The chemical reactions occurring during the acid leaching process are as follows:

2LiFePO₄+H₂SO₄+H₂O₂→Li₂SO₄+2FePO₄↓+2H₂O;

2Li(NiₓCo_{y}Mn_{1-x-y})O₂+3H₂SO₄+3H₂O₂→Li₂SO₄+2xNiSO₄+2yCoSO₄+2(1-x-y)MnSO₄+6H₂O+2O₂↑;

2Li(Co/Mn/Ni)O₂+3H₂SO₄+H₂O₂→Li₂SO₄+2(Co/Mn/Ni)SO₄+4H₂O+O₂↑.

Test Example 5: Test for flotation separation efficiency included the following steps:
In the XFG hanging-cell flotation machine, mixing the recycled material powder from lithium-ion batteries with water to prepare a slurry, and adding NaOH to adjust a pH of the slurry to 9.5-10, to obtain a first ore slurry with a concentration of 40 g/L; adding a collector n-dodecane to the first ore slurry at 250 g/L and conditioning the ore slurry for 3 min; then adding a frothing agent methyl isobutyl carbinol (MIBC) at 180 g/L and continuously conditioning the ore slurry for 1 min; opening the air valve, controlling a aeration rate to 0.8 L/min and a stirring speed to 1800 r/min; performing one rougher flotation and two times of scavenger flotation, to obtain an ore slurry underflow and a froth product (including rougher froth and scavenger froth); subjecting the ore slurry underflow to solid-liquid separation and drying to obtain a metal recovery powder enriched in a cathode material; and subjecting the froth product to solid-liquid separation and drying to obtain a graphite recovery powder.

The metal recovery rate and separation accuracy were calculated using the following formula to evaluate the flotation separation efficiency: $Metal recovery rate = \frac{{M}_{t} \times {β}_{t 1}}{{M}_{0} \times {β}_{0}} \times 100 % ;$ $Separation accuracy = \frac{{M}_{t} {β}_{t 1}}{{M}_{t} {β}_{t 1} + {m}_{t} {β}_{t 2}} \times 100 % ;$ where M₀, Mₜ and mₜ are addition amount of the recycled material powder from lithium-ion batteries, yield of the metal recovery powder, and yield of the graphite recovery powder, respectively, β₀, βₜ₁ and βₜ₂ are a total content percentage of metal elements in the recycled material powder from lithium-ion batteries, a total content percentage of metal elements in metal recovery powder, and a total content percentage of metal elements in graphite recovery powder, respectively, with the metal elements including at least one selected from the group consisting of Ni, Co, Mn, Fe, and Li.

Test Example 6: The particle size of recycled material powder from lithium-ion batteries was tested in accordance with GB/T 19077.1-2016.

The test results of the recycled material powder from lithium-ion batteries obtained in the Examples and Comparative Examples are shown in Tables 1, 2, and 3.

**Table 1**

| Samples | BET, m²/g | W_{DOC}, ‰ | | | S=W_{DOC}×BET, m²/kg | | |
|---|---|---|---|---|---|---|---|
| | | pH=2 | pH=7 | pH=10 | pH=2 | pH=7 | pH=10 |
| Example 1 | 2.00 | 5.05 | 6.25 | 8.84 | 10.11 | 12.51 | 17.69 |
| Example 2 | 1.14 | 5.15 | 7.22 | 8.59 | 5.87 | 8.23 | 9.79 |
| Example 3 | 2.92 | 9.50 | 7.20 | 10.20 | 27.74 | 21.02 | 29.78 |
| Example 4 | 2.98 | 5.12 | 6.05 | 9.14 | 15.26 | 18.03 | 27.24 |
| Example 5 | 2.62 | 9.14 | 8.88 | 12.65 | 23.95 | 23.27 | 33.14 |
| Example 6 | 1.96 | 8.22 | 6.24 | 13.50 | 16.08 | 12.21 | 26.41 |
| Example 7 | 13.77 | 1.40 | 1.70 | 2.80 | 19.28 | 23.41 | 38.56 |
| Example 8 | 13.68 | 1.70 | 1.70 | 1.90 | 23.26 | 23.26 | 25.99 |
| Example 9 | 13.94 | 0.60 | 0.60 | 2.20 | 8.36 | 8.36 | 30.67 |
| Example 10 | 2.35 | 4.79 | 5.84 | 6.08 | 11.26 | 13.72 | 14.29 |
| Example 11 | 1.84 | 7.04 | 8.05 | 12.22 | 12.95 | 14.81 | 22.48 |
| Example 12 | 1.84 | 7.24 | 9.84 | 10.02 | 13.32 | 18.11 | 18.44 |
| Example 13 | 2.22 | 5.08 | 6.02 | 8.45 | 11.28 | 13.36 | 18.76 |
| Example 14 | 1.98 | 5.15 | 6.18 | 8.74 | 10.20 | 12.24 | 17.31 |
| Example 15 | 2.64 | 5.06 | 6.35 | 8.66 | 13.36 | 16.76 | 22.86 |
| Example 16 | 1.95 | 7.21 | 9.84 | 13.37 | 14.06 | 19.19 | 26.07 |
| Example 17 | 1.78 | 13.87 | 15.22 | 17.55 | 24.69 | 27.09 | 31.24 |
| Example 18 | 2.26 | 0.07 | 0.11 | 0.07 | 0.16 | 0.25 | 0.15 |
| Example 19 | 5.61 | 0.35 | 0.55 | 0.34 | 1.97 | 3.10 | 1.89 |
| Example 20 | 14.71 | 1.71 | 2.86 | 2.04 | 25.10 | 42.03 | 30.03 |
| Comparative Example 1 | 0.82 | 0.12 | 0.16 | 0.09 | 0.10 | 0.13 | 0.07 |
| Comparative Example 2 | 1.24 | 37.24 | 35.45 | 36.56 | 46.18 | 43.96 | 45.33 |
| Comparative Example 3 | 2.82 | 16.87 | 15.44 | 17.22 | 47.57 | 43.54 | 48.56 |

**Table 2**

| Samples | Contents of Elements, % | | | | | Dv10, µm | Dv50, µm |
|---|---|---|---|---|---|---|---|
| | Ni | Co | Mn | Li | Fe | | |
| Example 1 | 27.1838 | 4.1116 | 8.141 | 4.5991 | 0.3527 | 2.01 | 5.57 |
| Example 2 | 27.0164 | 4.0589 | 8.0808 | 4.5447 | 0.3321 | 1.52 | 4.77 |
| Example 3 | 26.6087 | 4.0528 | 7.9635 | 4.5528 | 0.344 | 2.32 | 6.84 |
| Example 4 | 25.4345 | 3.8927 | 6.4342 | 5.3925 | 0.1717 | 2.14 | 7.12 |
| Example 5 | 45.2121 | 6.2347 | 4.9327 | 6.7888 | 0.2511 | 2.06 | 6.44 |
| Example 6 | 12.5554 | 5.0214 | 6.5145 | 3.2568 | 0.1021 | 2.18 | 5.99 |
| Example 7 | 0.0142 | / | 0.0169 | 2.4023 | 16.9527 | 0.93 | 6.96 |
| Example 8 | 0.0181 | / | 0.0188 | 2.409 | 17.1075 | 0.74 | 4.08 |
| Example 9 | 0.0157 | / | 0.0272 | 2.4537 | 17.8443 | 0.97 | 7.64 |

**Table 3**

| Samples | Metal leaching rate, % | Metal recovery rate, % | Separation accuracy, % |
|---|---|---|---|
| Example 1 | 68.2 | 84.5 | 82.92 |
| Example 2 | 59.5 | 80.22 | 71.54 |
| Example 3 | 49.7 | 80.05 | 80.24 |
| Example 4 | 54.7 | 81.99 | 81.54 |
| Example 5 | 52.5 | 80.14 | 78.27 |
| Example 6 | 62.73 | 82.41 | 80.55 |
| Example 7 | 98.21 | 85.35 | 74.82 |
| Example 8 | 95.66 | 87.62 | 78.22 |
| Example 9 | 90.14 | 84.11 | 75.55 |
| Example 10 | 67.21 | 86.26 | 84.54 |
| Example 11 | 65.84 | 80.67 | 79.51 |
| Example 12 | 66.59 | 80.71 | 80.98 |
| Example 13 | 68.25 | 85.58 | 82.02 |
| Example 14 | 68.25 | 84.68 | 83.04 |
| Example 15 | 58.64 | 82.41 | 80.62 |
| Example 16 | 61.47 | 79.84 | 78.55 |
| Example 17 | 50.24 | 74.22 | 70.67 |
| Example 18 | 81.69 | / | / |
| Example 19 | 76.45 | / | / |
| Example 20 | 72.62 | 82.24 | 70.84 |
| Comparative Example 1 | 46.2 | 72.27 | 68.28 |
| Comparative Example 2 | 47.69 | 70.54 | 65.25 |
| Comparative Example 3 | 45.34 | 72.74 | 68.95 |

According to the comprehensive analysis of Tables 1-3, it can be seen that the recycled material powder from lithium-ion batteries provided in the Examples of the present disclosure exhibit better metal leaching rate and flotation separation efficiency compared to those in the Comparative Examples.

By comparing Examples 1-3, it can be seen that although the separation indexes S of Example 2 at different pH values all satisfy 0.15 m²/kg≤S≤43 m²/kg, due to a relatively low BET of the recycled material powder from lithium-ion batteries, the separation index S at pH=10 exceeds a specified range (13 m²/kg≤S≤40 m²/kg), ultimately leading to a decrease in flotation separation efficiency. The reason lies in that a relatively low BET of Example 2 indicates the presence of more agglomerates in the recycled material powder from lithium-ion batteries, and these agglomerates have few pores, resulting in a decrease in the separation rate of the cathode and anode materials. Although the separation indexes S of Example 3 at different pH values all satisfy 0.15 m²/kg≤S≤43 m²/kg, due to a relatively high BET and W_{DOC} of the recycled material powder from lithium-ion batteries, the separation index S at pH=2 exceeds a specified range (2 m²/kg≤S≤24 m²/kg), ultimately leading to a decrease in metal leaching rate. The reason lies in that a relatively high BET indicates a small particle size or high porosity of the recycled material powder from lithium-ion batteries, combined with a larger W_{DOC}, this causes the powder to tend to float on the liquid surface during the hydrometallurgy process, leading to a decrease in leaching efficiency. Because the separation index of Example 1 satisfies the specified ranges at both low pH and high pH, the recycled material powder from lithium batteries has good leaching efficiency and flotation separation efficiency.

Examples 1, 2, and 4 have approximate W_{DOC}, but different BET values. From the results, it can be seen that as the BET increases, the metal leaching rate of the recycled material powder from lithium-ion batteries exhibits a trend of first increasing and then decreasing. The reason lies in that when the BET is excessively high, the recycled material powder from lithium-ion batteries tends to float on the liquid surface, making it difficult to be completely wetted by the acid leaching solution, thereby inhibiting the effective leaching of metals. Conversely, when the BET is excessively low, the recycled material powder from lithium-ion batteries often suffers from severe agglomeration with active surfaces being encapsulated, which is likewise unfavorable for the acid leaching reaction. Therefore, either excessively high or low BET will lead to a decrease in leaching efficiency during the hydrometallurgy process, which is not conducive to improving the metal leaching rate. In addition, as the BET increases, the metal recovery rate and separation accuracy of the recycled material powder from lithium-ion batteries both exhibit a trend of first increasing and then decreasing. The reason lies in that when the BET is excessively high, the powder particles have either an excessively small particle size or an excessively high porosity, resulting in diminished density differences, and making metal oxide powder more prone to attach to bubbles and float upward with the bubbles, leading to decreased separation accuracy. In contrast, when the BET is excessively low, the recycled material powder from lithium-ion batteries suffers from severe agglomeration, with graphite powder and metal compound powder being tightly bound to each other, making effective separation difficult, which results in a decreased separation efficiency and consequently decreased metal recovery rate.

Examples 3 and 4 have approximate BET values, but different W_{DOC}. From the results, it can be seen that as the W_{DOC} increases, both the metal leaching rate and flotation separation efficiency of the recycled material powder from lithium-ion batteries decrease. The reason lies in that the more residual organic matter in the recycled material powder from lithium-ion batteries, the lower the wettability difference between surfaces of metal compound particles and graphite particles, thereby reducing the flotation efficiency. In addition, the residual organic matter in the recycled material powder from lithium-ion batteries dissolves during the acid leaching process and acts as a surfactant, which makes it difficult to eliminate the bubbles generated during the leaching process, and even makes the metal compound powder particles attach to the surface of the bubbles, preventing them from contacting with the acid leaching solution for reaction. Consequently, the higher the W_{DOC}, the lower the metal leaching efficiency.

Compared to Example 1, Comparative Example 1 has lower BET and W_{DOC}, and the BET is lower than the specified range, causing the separation index S to fall outside the range of the present disclosure, and therefore the recycled material powder from lithium-ion batteries has lower metal leaching rate and flotation separation efficiency. Comparative Example 1 demonstrates that controlling the process of obtaining the recycled material powder from lithium-ion batteries can effectively control the BET and W_{DOC} of the recycled material powder, thereby affecting its application. The heat treatment process of Comparative Example 1 comprises a higher temperature and a lower negative pressure, resulting in a higher degree of organic matter removal from the recycled material powder from lithium-ion batteries. Due to the higher temperature, the metal compound powder even undergoes grain boundary fusion, thereby leading to increased particle size, decreased porosity, and reduced BET of the material powder.

In Comparative Example 2, the heat treatment of the dried intermediate is carried out at a lower temperature (300°C) and an atmospheric pressure, resulting in increased residual organic matter in the recycled material powder from lithium-ion batteries, and the residual organic matter act as a binder to bind the cathode and anode materials together, forming tightly bound agglomerates. Therefore, compared to Example 1, Comparative Example 2 has a lower BET and a higher W_{DOC}, causing the separation index S to fall outside the range of the present disclosure, and thus resulting in a lower acid leaching rate and flotation separation efficiency.

Examples 1, 10, 11, and 17 show the recycled material powder from lithium-ion batteries obtained under different ultraviolet irradiation durations. As the irradiation duration increases, the BET of the recycled material powder from lithium-ion batteries increases, and the overall level of W_{DOC} decreases. The reason lies in that the longer the irradiation duration, the higher the degree of decomposition of organic matter, thereby preventing the residual organic matter from binding particles of the recycled material powder from lithium-ion batteries together, which in turn increases the BET. Example 17 is not subjected to irradiation treatment, and therefore has lower BET and higher W_{DOC}, causing the separation index S at pH=2 to fall outside the specified range of the present disclosure, thereby resulting in a lower metal leaching rate. Compared to Example 1, Example 10 has a lower metal leaching rate, but a higher separation efficiency. The reason lies in that Example 10 has a higher BET, indicating a smaller particle size or a higher porosity, which causes the powder to tend to float on the liquid surface, thereby resulting in a lower metal leaching rate. However, due to the more thorough organic matter removal (i.e., a lower W_{DOC}), the wettability difference between surfaces of metal compound particles and graphite particles increases, resulting in a better separation efficiency during flotation.

Examples 1, 12, and 13 show the recycled material powder from lithium-ion batteries obtained by heat treatment under different pressures. As the pressure decreases (the negative pressure increases), the BET gradually increases and the W_{DOC} gradually decreases. The reason lies in that the negative pressure during the heat treatment process can promote the volatilization of the organic matter, allowing evolved gases to escape from the pores and thereby reducing the binding of powder particles by residual organic matter.

Examples 1, 14, and 15 show the recycled material powder from lithium-ion batteries obtained at different cooling rates. As the cooling rate increases, the BET of the recycled material powder from lithium-ion batteries increases, while the W_{DOC} does not change significantly. The reason lies in that an excessively high cooling rate induces residual stress within the particles, which leads to particle fracture. The fracture leads to increased particle porosity, thereby increasing the BET. In Comparative Example 3, the cooling process of the heat-treated intermediate was not controlled, and the heat-treated intermediate was instantly exposed to cold ambient air. Due to the residual stress, internal cracks occur in the material, resulting in increased BET. Additionally, the organic matter in the environment (including organic matter in the air and that volatilized during the heat treatment process) rapidly condenses and adheres to the surface of the powder particles, thereby results in increased W_{DOC}. As a result, the separation index S at pH=10 is greater than 40 m²/kg, and the metal leaching rate and flotation separation efficiency are lower than those in Example 1.

In Example 16, the flash drying is not carried out, that is, the photocatalytically treated intermediate is directly subjected to heat treatment, resulting in a slight decrease in BET and an increase in W_{DOC} of the recycled material powder from lithium-ion batteries. The reason lies in that if the photocatalytically treated intermediate is not subjected to flash drying to be adequately dispersed, which prevents the organic matter from being fully exposed and thereby hinders its decomposition during heat treatment. Consequently, the W_{DOC} of Example 16 is higher than that of Example 1. Moreover, insufficient dispersion can lead to a decrease in BET. Moreover, if the photocatalytically treated intermediate is not subjected to flash drying, the moisture in the powder particles rapidly evaporates at high temperatures during the heat treatment, causing intense expansion or burst phenomena, which leads to an increase in BET. Under the two opposing trends, the BET of the recycled material powder from lithium-ion batteries in Example 16 is slightly smaller than that in Example 1, and the W_{DOC} is larger than that in Example 1.

The raw material used to obtain the crude recycled material from lithium-ion batteries in Example 18 is the cathode sheets, due to a lower content of the organic matter in the cathode sheets than that in the aluminum-cased batteries as a whole, the W_{DOC} of the obtained recycled material powder from lithium-ion batteries is smaller. Due to the absence of anode material graphite and the lower W_{DOC}, the recycled material powder from lithium-ion batteries exhibits higher metal leaching rate, and can be directly used for regeneration of cathode material without requiring flotation separation. However, due to the need for fine disassembly of the battery to obtain the cathode sheets, it is difficult to achieve large-scale production in industry.

In Example 19, the crude recycled material from lithium-ion batteries is also prepared from the cathode sheets by shredding, the W_{DOC} of the obtained recycled material powder from lithium-ion batteries is lower than that of Examples 7-9. However, due to the higher heat treatment temperature and the application of pressure during heat treatment, the cathode material undergoes grain boundary fusion, resulting in a lower BET and a separation index S lower than the specified range at pH ≤ 3 of the obtained recycled material powder from lithium-ion batteries. Consequently, the metal leaching efficiency is lower than that of Examples 7-9.

In Example 20, a ball milling process is used instead of a flash drying process, and the cooling rate is 10°C/min. The obtained recycled material powder from lithium-ion batteries exhibits a larger BET than that of Examples 7-9, while the W_{DOC} remains substantially similar. Therefore, the separation index S is higher, exceeding the specified range at pH≤3, leading to a lower metal leaching efficiency than those of Examples 7-9. However, the separation index S at pH=10 is still within the specified range, and therefore the decrease in flotation separation efficiency is not significant.

In summary, the recycled material powder from lithium-ion batteries provided in the present disclosure has a separation index S satisfying 0.15 m²/kg≤S≤43 m²/kg, and exhibits good metal leaching rate and flotation separation efficiency of cathode and anode materials. In addition, the preparation method provided in the present disclosure can obtain the recycled material powder from lithium-ion batteries with a separation index S satisfying 0.15 m²/kg≤S≤43 m²/kg at different pH values, and by adjusting the process parameters in the preparation method, the separation index S of the material can be regulated, thereby regulating the application performance of the recycled material powder from lithium-ion batteries.

## Claims

1. A recycled material powder from lithium-ion batteries, comprising a metal compound powder and an elemental carbon material, wherein the metal compound powder comprises at least one element selected from the group consisting of: lithium, nickel, cobalt, manganese and iron; the recycled material powder from lithium-ion batteries has a separation index S satisfying 0.15 m²/kg≤S≤43 m²/kg, where S=W_{DOC}×BET, W_{DOC} refers to a mass percentage of a dissolved organic carbon in the recycled material powder from lithium-ion batteries, and the dissolved organic carbon refers to an organic carbon which is capable of dissolving or dispersing in an aqueous solution with a pH value of 1-14; and BET refers to a specific surface area of the recycled material powder from lithium-ion batteries, expressed in m²/g.

2. The recycled material powder from lithium-ion batteries of claim 1, wherein the recycled material powder from lithium-ion batteries satisfies at least one of the following features 1 to 4:
feature 1: when the pH value of the aqueous solution is less than or equal to 3, the separation index S of the recycled material powder from lithium-ion batteries satisfies 2 m²/kg≤S≤24 m²/kg;
feature 2: when the pH value of the aqueous solution is greater than or equal to 10, the separation index S of the recycled material powder from lithium-ion batteries satisfies 13 m²/kg≤S≤40 m²/kg;
feature 3: the W_{DOC} of the recycled material powder from lithium-ion batteries satisfies W_{DOC}≤15‰; and
feature 4: the BET of the recycled material powder from lithium-ion batteries satisfies 1 m²/g≤BET≤15 m²/g.

3. The recycled material powder from lithium-ion batteries of claim 1 or 2, wherein a mass percentage of an iron element in the recycled material powder from lithium-ion batteries is 10% to 30%, and the BET of the recycled material powder from lithium-ion batteries is 10-15 m²/g.

4. The recycled material powder from lithium-ion batteries of claim 1 or 2, wherein a mass percentage of a cobalt element in the recycled material powder from lithium-ion batteries is 1% to 50%, and the BET of the recycled material powder from lithium-ion batteries is 1-3 m²/g.

5. The recycled material powder from lithium-ion batteries of claim 1 or 2, wherein the recycled material powder from lithium-ion batteries has a Dv10 of 0.1-1.5 µm.

6. The recycled material powder from lithium-ion batteries of claim 1 or 2, wherein the recycled material powder from lithium-ion batteries has a Dv10 of 0.5-5.2 µm.

7. The recycled material powder from lithium-ion batteries of claim 1 or 2, wherein a mass percentage of a lithium element in the recycled material powder from lithium-ion batteries is 0%-10%.

8. A preparation method of the recycled material powder from lithium-ion batteries of any one of claims 1 to 7, comprising the following steps:
providing a crude recycled material from lithium-ion batteries comprising a anode material, a cathode material, and organic matter;
subjecting the crude recycled material from lithium-ion batteries to photocatalytic oxidation treatment to obtain a photocatalytically treated intermediate;
subjecting the photocatalytically treated intermediate to flash drying to obtain a dried intermediate;
subjecting the dried intermediate to heat treatment to obtain a heat-treated intermediate; and
cooling the heat-treated intermediate to 20°C or less under an inert atmosphere to obtain a cooled intermediate, and then shredding and sieving the cooled intermediate successively to obtain the recycled material powder from lithium-ion batteries.

9. The preparation method of claim 8, wherein the cathode material comprises at least one selected form the group consisting of lithium cobalt oxide, lithium manganese oxide, lithium nickel oxide, lithium nickel cobalt manganese oxide, lithium nickel cobalt aluminum oxide, and lithium iron phosphate; and/or the anode material comprises graphite.

10. Use of the recycled material powder from lithium-ion batteries of any one of claims 1 to 7, wherein the recycled material powder from lithium-ion batteries is used in hydrometallurgy, and the hydrometallurgy comprises the steps of dispersing the recycled material powder from lithium-ion batteries in an acid solution to obtain an acid-leachate containing metal ions.

11. Use of the recycled material powder from lithium-ion batteries of any one of claims 1 to 7, wherein the recycled material powder from lithium-ion batteries is used in regeneration of a cathode material; and the regeneration of the cathode material comprises the steps of enriching the cathode material in the recycled material powder from lithium-ion batteries by flotation separation, adding a lithium source to the cathode material and calcining a resulting mixture to obtain a regenerated cathode material.

12. Use of the recycled material powder from lithium-ion batteries of any one of claims 1 to 7, wherein the recycled material powder from lithium-ion batteries is used in recycling of graphite; and the recycling of graphite comprises the steps of enriching the graphite in the recycled material powder from lithium-ion batteries by flotation separation so as to recycle the graphite.

13. A hydrometallurgy method, comprising dispersing the recycled material powder from lithium-ion batteries of any one of claims 1 to 7 in an acid solution to obtain an acid-leachate containing metal ions.

14. A regeneration method for a cathode material, comprising enriching the cathode material in the recycled material powder from lithium-ion batteries of any one of claims 1 to 7 by flotation separation, adding a lithium source to the cathode material and calcining a resulting mixture to obtain a regenerated cathode material.

15. A recycling method for graphite, comprising enriching the graphite in the recycled material powder from lithium-ion batteries of any one of claims 1 to 7 by flotation separation, so as to recycle the graphite.
